# FASCICULE DE BREVET EUROPEEN

(11) **EP 3 963 201 B1**
(45) Date de publication et mention de la délivrance du brevet: **05.04.2023**
(21) Numéro de dépôt: 20742327.8
(22) Date de dépôt: 09.06.2020
(51) Int. Cl.: F02K 1/72, F02K 1/76

(54) **INVERSEUR DE POUSSÉE À CAPOT MOBILE COMPRENANT UN MÉCANISME DE DIMINUTION DE POUSSÉE INDÉPENDANT DU CAPOT MOBILE**
SCHUBUMKEHRER MIT BEWEGLICHER HAUBE MIT SCHUBREDUZIERUNGSMECHANISMUS, DER UNABHÄNGIG VON DER BEWEGLICHEN HAUBE IST
MOBILE-COWL THRUST REVERSER COMPRISING A THRUST-REDUCTION MECHANISM THAT IS INDEPENDENT OF THE MOBILE COWL

(30) Priorité: 14.06.2019 FR 1906381
(43) Date de publication de la demande: 09.03.2022
(73) Titulaire: Safran Nacelles, 76700 Gonfreville-l'Orcher (FR); SAFRAN AIRCRAFT ENGINES, 75015 Paris (FR)
(72) Inventeur: GUILLOIS, Denis, 77550 MOISSY-CRAMAYEL (FR); NOBELEN, Florent, Matthieu, Jacques, 77550 MOISSY-CRAMAYEL (FR); BISANTI, Luigi, 77550 MOISSY-CRAMAYEL (FR)
(74) Mandataire: Brevalex
(86) Numéro de dépôt international: PCT/FR2020/050976
(87) Numéro de publication internationale: WO 2020/249896

(56) Documents cités:
- FR-A1- 2 907 512
- FR-A1- 2 995 876
- GB-A- 1 421 153
- US-B1- 10 119 495

## Description

### Domaine technique

L'invention se rapporte au domaine des inverseurs de poussée pour ensemble propulsif d'aéronef, et plus spécifiquement au domaine des inverseurs à grilles.

### État de la technique antérieure

De manière générale, un inverseur de poussée peut être placé dans une configuration de jet direct, permettant à l'ensemble propulsif de générer une poussée, et dans une configuration de jet inversé - ou d'inversion de poussée - dans laquelle une partie des gaz circulant dans l'ensemble propulsif est redirigée vers l'avant de l'ensemble propulsif, générant ainsi une contre-poussée de freinage de l'aéronef.

Un inverseur de poussée à grilles équipe généralement un ensemble propulsif doté d'un turboréacteur à double flux. Dans un tel ensemble propulsif, un flux primaire circule dans une veine primaire traversant le générateur de gaz du turboréacteur et un flux secondaire circule dans une veine secondaire entourant le générateur de gaz.

La plupart des inverseurs à grilles, par exemple celui décrit dans le document WO 2011/131874 A1, sont configurés de sorte que la contre-poussée résulte d'une réorientation du flux secondaire.

Pour ce faire, l'inverseur comprend typiquement un capot coulissant permettant de dégager une ouverture radiale dans laquelle sont placées les grilles, et des volets d'obturation de la veine secondaire. En jet direct, le capot recouvre les grilles et les volets sont rétractés de sorte que le flux secondaire contribue pleinement à la propulsion de l'aéronef. Pour inverser le jet, le capot coulissant est déplacé vers l'arrière de l'ensemble propulsif de manière à dégager ladite ouverture radiale. Le déplacement du capot est associé à un déploiement des volets dans la veine secondaire. En jet inversé, les volets déployés permettent de dévier une partie du flux secondaire vers les grilles lesquelles sont configurées pour orienter la partie du flux ainsi déviée vers l'avant de l'ensemble propulsif.

Dans différentes phases de vol, il peut s'avérer nécessaire ou souhaitable de diminuer la poussée générée par l'ensemble propulsif. En phase de descente par exemple, une poussée réduite permet d'augmenter la pente de descente d'un aéronef en vue de son atterrissage, ce qui permet notamment de réduire les nuisances sonores, de désengorger les espaces aériens à proximité des aéroports, et éventuellement de réduire la consommation de carburant.

Dans une telle phase de descente, la réduction de poussée ne peut se faire par simple réduction des gaz - c'est-à-dire uniquement par réduction du débit carburant et du régime moteur - car le moteur est déjà régulé sur une butée ralentie en-dessous de laquelle il ne peut pas descendre tout en respectant des contraintes d'opérabilité (éventuel besoin de ré-accélération, protection contre l'extinction en cas d'intempéries, etc.), de pressurisation, ou de fourniture d'air à l'avion (liste de contraintes à respecter non exhaustive). Il faut donc trouver un autre moyen que la réduction des gaz et de régime moteur pour réduire la poussée.

Le document US 10 119 495 B1 décrit un procédé permettant de réduire la poussée en plaçant l'inverseur dans une configuration intermédiaire entre la configuration de jet direct et la configuration de jet inversé. Il est notamment décrit dans ce document un mode de réalisation dans lequel l'inverseur est un inverseur à grilles (cf. figures 6 à 8 du document précité).

L'utilisation d'un inverseur conventionnel pour moduler la poussée présente plusieurs inconvénients. Notamment, un inverseur conventionnel placé dans une telle configuration intermédiaire tend à générer une contre-poussée non souhaitable dans certaines phases de vol. De plus, un inverseur conventionnel nécessite typiquement de modifier la position d'une structure mobile telle qu'une porte ou un capot coulissant afin de diminuer la poussée, ce qui modifie l'aérodynamique externe de la nacelle et peut ainsi perturber l'écoulement de l'air sur les ailes et produire une perte de portance, néfaste et dangereuse pour l'avion. En effet, cela peut entraîner une perte de contrôle de la poussée et des qualités de vol de l'avion.

De plus, en cas de panne du système décrit dans le document US 10 119 495 B1, l'inverseur de poussée pourrait se déployer entièrement (jet direct) plutôt que partiellement (configuration intermédiaire), conduisant à produire une contre-poussée empêchant le contrôle de la trajectoire de l'avion. A cet égard, les autorités de certification considèrent que le déploiement en vol d'un inverseur de poussée est dangereux.

Plus généralement, le déploiement partiel des inverseurs de poussée conventionnels ne permet pas de moduler la poussée d'un ensemble propulsif de manière sûre, en particulier lorsque l'ensemble propulsif comprend un turboréacteur à grand taux de dilution, les effets aérodynamiques du déploiement de l'inverseur étant d'autant plus importants que le taux de dilution est grand.

Un autre inverseur de poussée pour ensemble propulsif d'aéronef est connu de GB 1 421 153 A.

### Exposé de l'invention

L'invention vise à procurer un inverseur de poussée capable de diminuer la poussée d'un ensemble propulsif, par exemple lors d'une phase de descente, tout en évitant les inconvénients associés aux techniques de diminution de poussée conventionnelles.

A cet effet, l'invention a pour objet un inverseur de poussée pour ensemble propulsif d'aéronef selon les caractéristiques de la revendication 1, cet inverseur comprenant une structure interne fixe, une structure externe mobile et au moins un volet d'obturation, cet inverseur étant configuré pour être placé dans :
- une configuration de poussée pleine dans laquelle la structure externe mobile est dans une position de fermeture et l'au moins un volet d'obturation est dans une position rétractée de manière à canaliser un écoulement de fluide dans un conduit délimité radialement à l'intérieur par la structure interne fixe et radialement à l'extérieur par la structure externe mobile,
- une configuration d'inversion de poussée dans laquelle la structure externe mobile est dans une position d'ouverture dégageant une ouverture radiale, et dans laquelle l'au moins un volet d'obturation est dans une position déployée de manière à dévier une partie dudit écoulement de fluide vers ladite ouverture radiale.

Selon l'invention, cet inverseur comprend un mécanisme d'actionnement configuré pour déplacer l'au moins un volet d'obturation entre la position rétractée et une position partiellement déployée lorsque la structure externe mobile est dans la position de fermeture, de manière à faire passer l'inverseur respectivement entre ladite configuration de poussée pleine et une configuration de poussée réduite.

L'invention procure ainsi un inverseur de poussée ayant deux fonctions distinctes, à savoir une fonction d'inversion de poussée classique et une fonction de diminution de poussée, ces deux fonctions étant réalisées par des mécanismes d'actionnement respectifs indépendants l'un de l'autre et tous deux capables de déplacer ledit au moins un volet d'obturation.

Contrairement aux inverseurs conventionnels, l'inverseur de l'invention permet d'augmenter les pertes de charge et par suite de diminuer la poussée sans déverrouiller la structure externe mobile.

Cet inverseur permet notamment d'augmenter la pente de descente d'un aéronef, ce qui permet entre autres de réduire la consommation de carburant d'une mission de vol typique, de réduire les nuisances sonores et de désengorger les espaces aériens à proximité des aéroports.

L'invention permet aussi de ne pas dégrader la manoeuvrabilité de l'aéronef, car l'aérodynamique externe n'est pas modifiée. L'écoulement externe à la nacelle n'est donc pas impacté, et en particulier l'écoulement autour des ailes n'est pas perturbé. De plus, en cas de déploiement intempestif du système à l'intérieur de la veine secondaire, la perte de charge ainsi présente dans la veine peut être compensée par une augmentation des gaz et du régime.

Selon l'invention, le mécanisme d'actionnement comprend au moins une biellette et un organe d'entraînement de l'au moins une biellette, l'organe d'entraînement étant mobile entre une position de repos et une position active, l'au moins une biellette étant reliée en une première extrémité à l'au moins un volet d'obturation et en une deuxième extrémité à l'organe d'entraînement de sorte que le déplacement de l'organe d'entraînement entre la position de repos et la position active entraîne un déplacement de l'au moins un volet d'obturation respectivement entre la position rétractée et la position partiellement déployée.

De préférence, l'organe d'entraînement peut être porté par la structure interne fixe.

Selon l'invention, le déplacement de l'organe d'entraînement entre la position de repos et la position active comprend un mouvement de rotation de l'organe d'entraînement autour d'un axe longitudinal de l'inverseur.

Dans un mode de réalisation, le déplacement de l'organe d'entraînement entre la position de repos et la position active peut comprendre une combinaison d'un mouvement de rotation de l'organe d'entraînement autour dudit axe longitudinal et d'un mouvement de translation de cet organe d'entraînement selon cet axe longitudinal.

De préférence, cet inverseur peut comprendre une pluralité de volets d'obturation et une pluralité de biellettes correspondantes, l'organe d'entraînement comprenant au moins un secteur d'anneau auquel sont reliées plusieurs desdites biellettes.

Dans un mode de réalisation, l'au moins une biellette peut être configurée pour entraîner l'au moins un volet d'obturation entre la position rétractée et la position déployée lorsque la structure externe mobile est déplacée entre la position de fermeture et la position d'ouverture.

L'invention a aussi pour objets un ensemble propulsif pour aéronef, cet ensemble propulsif comprenant un inverseur tel que défini ci-dessus, et un aéronef comprenant un tel ensemble propulsif.

L'invention a aussi pour objet un procédé de déploiement d'au moins un volet d'obturation d'un inverseur tel que défini ci-dessus, ce procédé comprenant simultanément une étape de maintien de ladite structure externe mobile dans ladite position de fermeture et une étape de déplacement de l'au moins un volet d'obturation, à l'aide dudit mécanisme d'actionnement, entre ladite position rétractée et ladite position partiellement déployée.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en coupe axiale d'un ensemble propulsif d'aéronef comprenant un turboréacteur à double corps et à double flux ;
[Fig. 2] est une vue schématique en coupe axiale d'un inverseur de poussée conforme à l'invention, dans une configuration de poussée pleine ;
[Fig. 3] est une vue schématique en coupe axiale de l'inverseur de la figure 2, dans une configuration d'inversion de poussée ;
[Fig. 4] est une vue schématique en coupe axiale de l'inverseur de la figure 2, dans une configuration de poussée réduite ;
[Fig. 5] est une vue schématique en coupe transversale d'un inverseur de poussée conforme à l'invention, comprenant un mécanisme d'actionnement par rotation selon un premier mode de réalisation, dans une configuration de poussée pleine ;
[Fig. 6] est une vue schématique en coupe transversale de l'inverseur de la figure 5, dans une configuration de poussée réduite ;
[Fig. 7] est une vue schématique en coupe transversale d'un inverseur de poussée conforme à l'invention, comprenant un mécanisme d'actionnement par rotation selon un deuxième mode de réalisation, dans une configuration de poussée réduite ;
[Fig. 8] est une vue schématique en perspective d'un inverseur de poussée conforme à l'invention, comprenant un mécanisme d'actionnement par rotation et étant représenté simultanément dans une configuration de poussée pleine et dans une configuration de poussée réduite ;
[Fig. 9] est une vue schématique en perspective d'un inverseur de poussée non couvert par les revendications, comprenant un mécanisme d'actionnement par translation et étant représenté simultanément dans une configuration de poussée pleine et dans une configuration de poussée réduite ;
[Fig. 10] est une vue schématique en coupe axiale d'un volet d'obturation et d'une biellette de l'inverseur de la figure 9, représentés simultanément dans la configuration de poussée pleine et dans la configuration de poussée réduite.

### Description détaillée de modes de réalisation

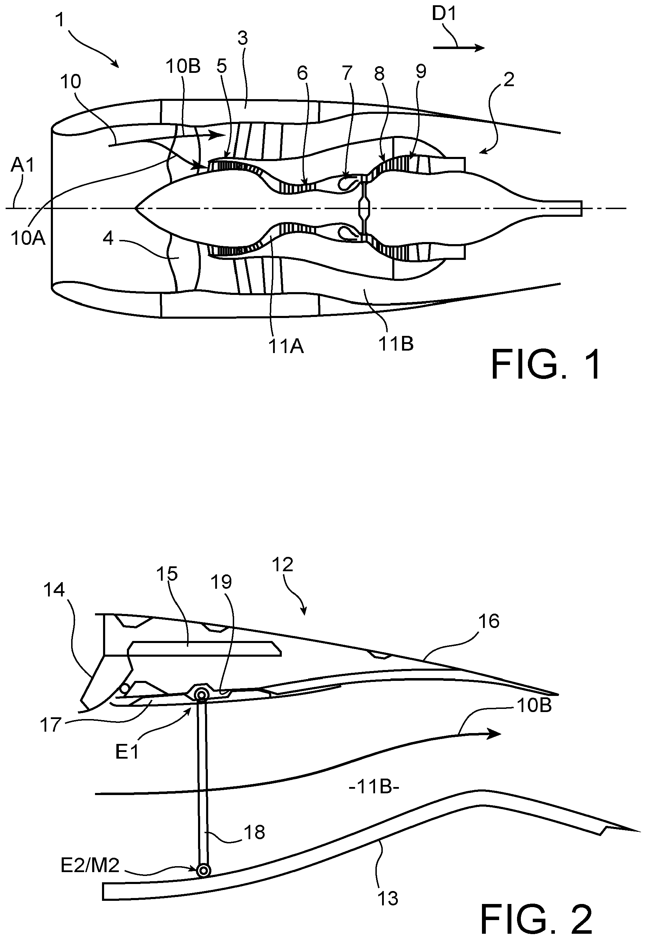

Il est représenté à la figure 1 un ensemble propulsif 1 d'aéronef comprenant une turbomachine 2 carénée par une nacelle 3. Dans cet exemple, la turbomachine 2 est un turboréacteur à double corps et à double flux.

Par la suite, les termes « amont », « aval », « avant » et « arrière » sont définis par rapport à un sens D1 d'écoulement des gaz à travers l'ensemble propulsif 1 lorsque celui-ci est propulsé.

Le turboréacteur 2 présente un axe central longitudinal A1 autour duquel s'étendent ses différents composants, en l'occurrence, de l'amont vers l'aval du turboréacteur 2, une soufflante 4, un compresseur basse pression 5, un compresseur haute pression 6, une chambre de combustion 7, une turbine haute pression 8 et une turbine basse pression 9. Les compresseurs 5 et 6, la chambre de combustion 7 et les turbines 8 et 9 forment un générateur de gaz.

De manière conventionnelle, lors du fonctionnement d'un tel turboréacteur 2, un écoulement d'air 10 pénètre dans l'ensemble propulsif 1 par une entrée d'air en amont de la nacelle 3, traverse la soufflante 4 puis se divise en un flux primaire 10A central et un flux secondaire 10B. Le flux primaire 10A s'écoule dans une veine primaire 11A de circulation des gaz traversant le générateur de gaz. Le flux secondaire 10B s'écoule quant à lui dans une veine secondaire 11B entourant le générateur de gaz et délimitée radialement vers l'extérieur par la nacelle 3.

L'invention concerne un inverseur de poussée 12 à grilles tel qu'illustré aux figures 2 à 4 pour inverser ou moduler la poussée générée par un tel ensemble propulsif 1.

Cet inverseur 12 comprend d'une part des éléments fixes par rapport à un stator du turboréacteur 2, parmi lesquels une structure interne fixe 13, un cadre avant 14 et des grilles 15 portées par le cadre avant 14.

Cet inverseur 12 comprend d'autre part des éléments mobiles par rapport aux éléments fixes précités, parmi lesquels une structure externe mobile 16 formant un capot mobile, des volets d'obturation 17 et des biellettes 18. Ces éléments mobiles permettent de modifier la configuration de l'inverseur 12.

La figure 2 montre l'inverseur 12 dans une configuration de poussée pleine, aussi appelée jet direct. Dans cette configuration, le capot mobile 16 est dans une position de fermeture dans laquelle il est axialement en appui contre le cadre avant 14 en recouvrant les grilles 15.

En jet direct, le capot mobile 16 et la structure interne fixe 13 délimitent radialement entre elles une partie aval de la veine secondaire 11B.

Les volets d'obturation 17 sont dans une position rétractée dans laquelle ils sont logés dans une cavité 19 du capot mobile 16 de manière à ne pas obturer la veine secondaire 11B.

Ainsi, en jet direct, l'inverseur 12 permet de canaliser le flux secondaire 10B vers l'arrière de l'ensemble propulsif 1 de sorte que ce flux secondaire 10B contribue pleinement à la propulsion de l'aéronef.

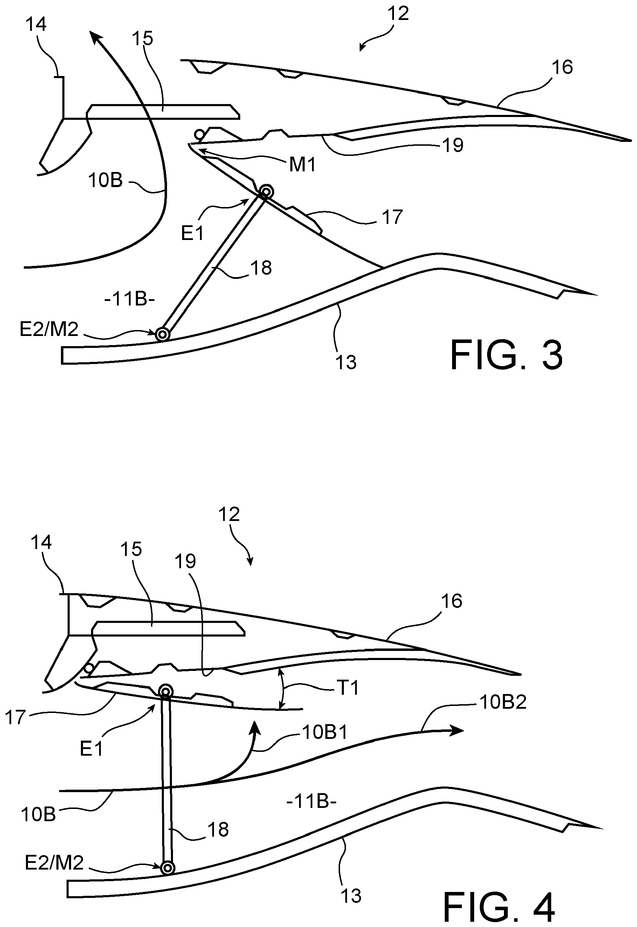

La figure 3 montre l'inverseur 12 dans une configuration d'inversion de poussée, aussi appelée jet inversé. Dans cette configuration, le capot mobile 16 est dans une position d'ouverture dans laquelle il dégage une ouverture radiale constituée dans cet exemple par des ouvertures des grilles 15. En effet, la translation axiale du capot mobile 16, vers l'arrière de l'ensemble propulsif 1 par rapport au cadre avant 14, découvre les grilles 15 qui sont solidaires du cadre avant 14.

Le coulissement du capot mobile 16 de la position de fermeture (figure 2) vers la position d'ouverture (figure 3) entraîne un déploiement des volets d'obturation 17 dans la veine secondaire 11B. Pour ce faire, les volets d'obturation 17 sont articulés au capot mobile 16 en un point d'articulation M1 et chacune des biellettes 18 est reliée en une première extrémité E1 à un volet d'obturation 17 respectif et en une deuxième extrémité E2 à la structure interne fixe 13.

En jet inversé, les volets d'obturation 17 sont ainsi dans une position déployée dans laquelle ceux-ci sont configurés pour dévier vers les grilles 15 une partie représentant dans cet exemple sensiblement la totalité du flux secondaire 10B (voir figure 3).

De manière connue en soi, les grilles 15 comprennent un aubage permettant de diriger le flux secondaire 10B traversant ces grilles 15 vers l'avant de l'ensemble propulsif 1.

Dans cette configuration d'inversion de poussée, le flux secondaire 10B génère ainsi une contre-poussée de freinage de l'aéronef.

Ce qui vient d'être décrit concerne les configurations de poussée pleine et d'inversion de poussée. Le passage de la première à la seconde et de la seconde à la première de ces configurations est réalisé par un premier mécanisme d'actionnement (non représenté) configuré pour déplacer axialement le capot mobile 16 de l'avant vers l'arrière ou de l'arrière vers l'avant respectivement, ce premier mécanisme d'actionnement comprenant typiquement une pluralité de vérins. Dans chacun de ces sens de translation du capot mobile 16, les volets 17 changent de position sous l'action des biellettes 18 qui, lors d'une telle translation, sont articulées par leur deuxième extrémité E2 en un point d'articulation M2 fixe par rapport à la structure interne fixe 13.

L'invention se rapporte plus spécifiquement à un deuxième mécanisme d'actionnement indépendant dudit premier mécanisme d'actionnement et permettant de déplacer les volets d'obturation 17 lorsque le capot mobile 16 est dans la position de fermeture, afin de diminuer la poussée sans générer de contre-poussée.

La figure 4 montre l'inverseur 12 dans une configuration de poussée réduite dans laquelle le capot mobile 16 est dans la position de fermeture et dans laquelle les volets d'obturation 17 sont dans une position partiellement déployée. Une partie 10B1 du flux secondaire 10B est dissipée en raison de l'interaction de ce flux avec les volets 17 qui obturent partiellement la veine secondaire 11B, de sorte que seule une partie restreinte 10B2 du flux secondaire 10B contribue en tant que telle à la propulsion de l'aéronef.

Dans cet exemple, chaque volet 17 partiellement déployé est orienté selon un angle T1 d'environ pi/6 radians par rapport à la position de ce volet 17 en position rétractée (voir figure 4).

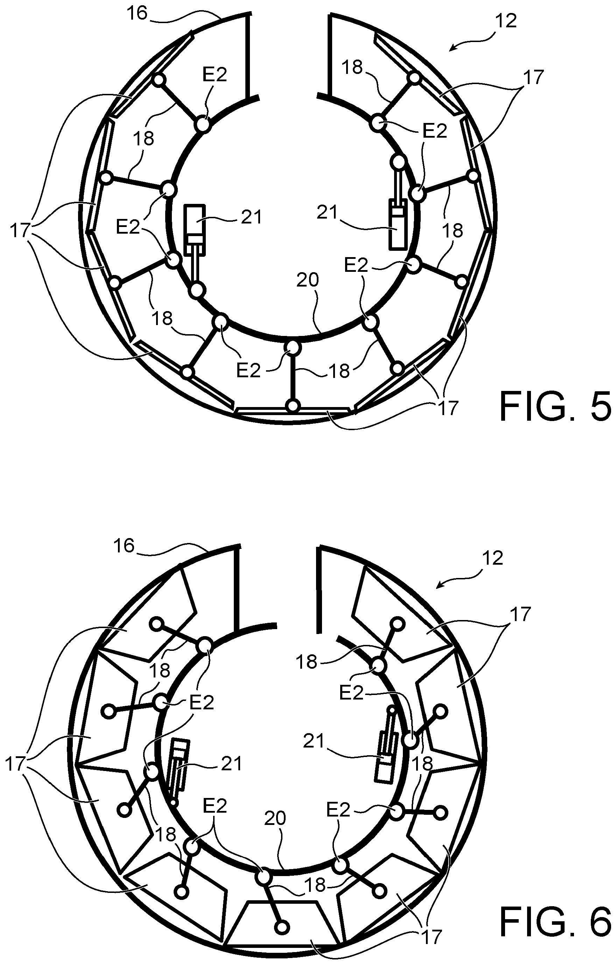

Les figures 5 à 8 montrent des exemples de mécanismes d'actionnement conformes à l'invention.

Dans chacun de ces exemples, le déploiement partiel des volets 17 résulte de la modification de la position relative de la deuxième extrémité E2 des biellettes 18 par rapport à la structure interne fixe 13.

A cet effet, le mécanisme d'actionnement comprend un organe d'entraînement 20 porté par la structure interne fixe 13 de l'inverseur 12 et auquel sont reliées les biellettes 18 par leur deuxième extrémité E2. Autrement dit, les biellettes 18 sont dans cet exemple reliées par leur deuxième extrémité E2 à la structure interne fixe 13 par l'intermédiaire de l'organe d'entraînement 20.

L'organe d'entraînement 20 est mobile entre une position de repos et une position active.

Lorsque l'organe d'entraînement 20 est en position de repos, le capot mobile 16 peut être déplacé entre la position de fermeture et la position d'ouverture tel que décrit ci-dessus en référence aux figures 2 et 3. Ainsi, lorsque l'organe d'entraînement 20 est en position de repos et que le capot mobile 16 est en position de fermeture, l'inverseur 12 est en configuration de poussée pleine. Lorsque l'organe d'entraînement 20 est en position de repos et que le capot mobile 16 est en position d'ouverture, l'inverseur 12 est en configuration d'inversion de poussée. La figure 5 montre l'inverseur 12 en configuration de poussée pleine, l'organe d'entraînement 20 étant en position de repos, le capot mobile 16 en position de fermeture et les volets 17 en position rétractée.

Dans cet exemple, le déplacement de l'organe d'entraînement 20 entre la position de repos et la position active n'est possible que lorsque le capot mobile 16 est maintenu en position de fermeture.

Lorsque l'organe d'entraînement 20 est en position active, l'inverseur 12 est en configuration de poussée réduite. La figure 6 montre l'inverseur 12 en configuration de poussée réduite, l'organe d'entraînement 20 étant en position active, le capot mobile 16 en position de fermeture et les volets 17 en position partiellement déployée.

Les figures 5 et 6 montrent un inverseur 12 ayant une architecture couramment dénommée « O-Duct », avec un capot mobile 16 réalisé en une seule pièce.

Dans ce mode de réalisation, l'organe d'entraînement 20 forme un secteur d'anneau auquel sont reliées toutes les biellettes 18 par leur deuxième extrémité E2.

Dans ce mode de réalisation, le déplacement de l'organe d'entraînement 20 entre la position de repos (figure 5) et la position active (figure 6) comprend un mouvement de rotation de cet organe d'entraînement 20 autour d'un axe longitudinal de l'inverseur 12 lequel coïncide avec l'axe A1 de l'ensemble propulsif 1.

La rotation de l'organe d'entraînement 20 autour de l'axe longitudinal de l'inverseur 12 entraîne un déplacement correspondant de la deuxième extrémité E2 des biellettes 18 de sorte que celles-ci entraînent un pivotement des volets 17 entre leur position rétractée et leur position partiellement déployée.

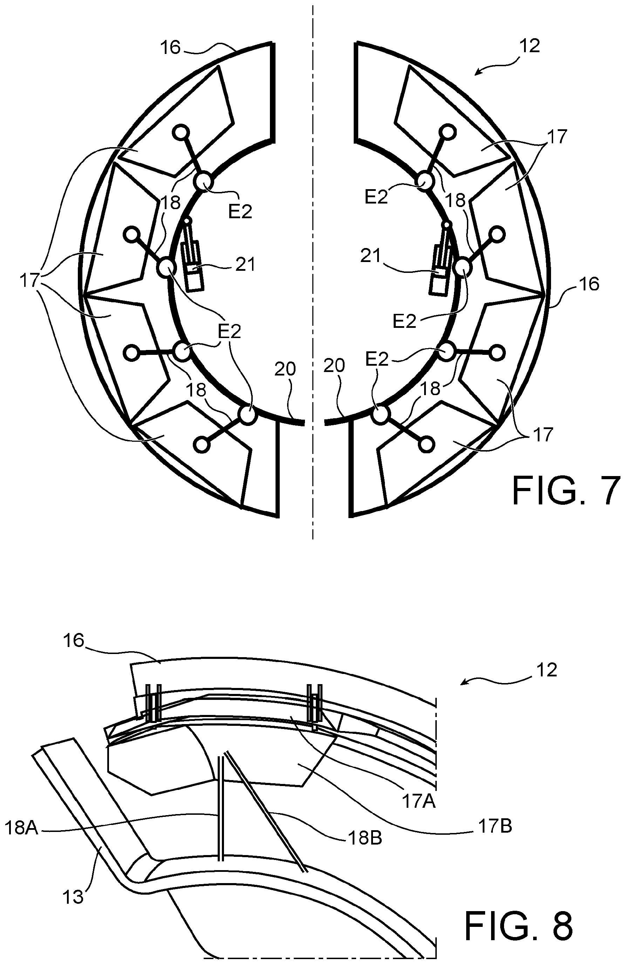

La figure 7 montre un inverseur 12 ayant une architecture couramment dénommée « D-Duct », avec un capot mobile 16 réalisé sous forme de deux demi-capots, l'inverseur 12 étant en configuration de poussée réduite.

Le mode de réalisation de la figure 7 se distingue aussi de celui des figures 5 et 6 en ce que l'organe d'entraînement 20 forme deux secteurs d'anneau. Les biellettes 18 de volets 17 reliés à l'un des demi-capots sont reliées par leur deuxième extrémité E2 à l'un de ces secteurs d'anneau, les biellettes 18 de volets 17 reliés à l'autre demi-capot étant reliées par leur deuxième extrémité E2 à l'autre secteur d'anneau.

Dans les modes de réalisation des figures 5 à 7, le déplacement de l'organe d'entraînement 20 entre la position de repos et la position active est réalisé par un actionneur comprenant dans ces exemples des vérins 21.

La figure 8 montre un volet et une biellette correspondante d'un inverseur 12 similaire à celui des modes de réalisation des figures 5 à 7 simultanément dans la configuration de poussée pleine et de poussée réduite : le volet est désigné par la référence 17A en position rétractée et par la référence 17B en position partiellement déployée, la biellette est désignée par la référence 18A en configuration de poussée pleine et par la référence 18B en configuration de poussée réduite.

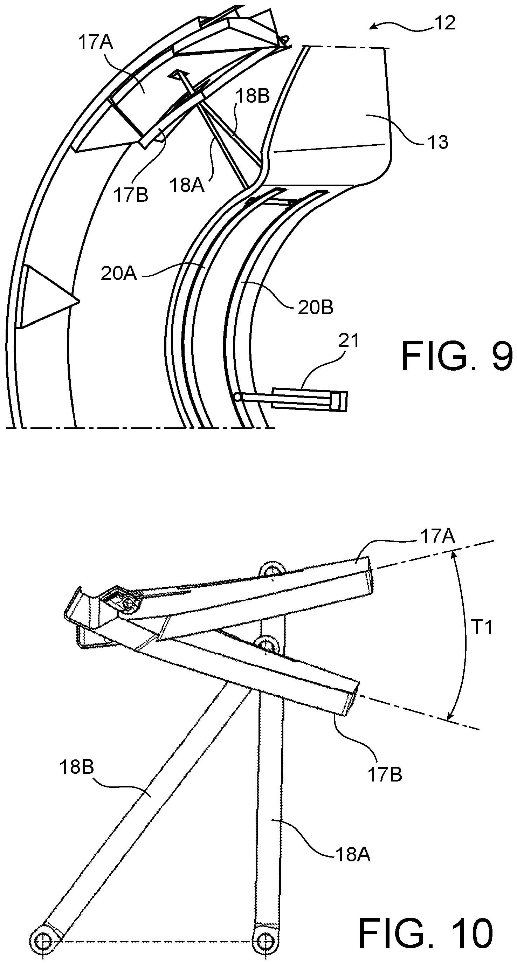

Les figures 9 et 10 montrent un autre mode de réalisation non couvert par les revendications et qui se distingue de ceux décrits ci-dessus par le fait que le déplacement de l'organe d'entraînement 20 entre la position de repos et la position active comprend un mouvement de translation de cet organe d'entraînement 20 selon ledit axe longitudinal de l'inverseur 12.

De manière similaire à la figure 8, l'inverseur 12 des figures 9 et 10 est montré simultanément dans la configuration de poussée pleine et dans la configuration de poussée réduite, l'organe d'entraînement étant désigné par la référence 20A en position de repos et par la référence 20B en position active.

## Revendications

1. Inverseur de poussée (12) pour ensemble propulsif (1) d'aéronef, cet inverseur (12) comprenant une structure interne fixe (13), une structure externe mobile (16) et au moins un volet d'obturation (17), cet inverseur (12) étant configuré pour être placé dans :
- une configuration de poussée pleine dans laquelle la structure externe mobile (16) est dans une position de fermeture et l'au moins un volet d'obturation (17) est dans une position rétractée de manière à canaliser un écoulement de fluide (10B) dans un conduit (11B) délimité radialement à l'intérieur par la structure interne fixe (13) et radialement à l'extérieur par la structure externe mobile (16),
- une configuration d'inversion de poussée dans laquelle la structure externe mobile (16) est dans une position d'ouverture dégageant une ouverture radiale, et dans laquelle l'au moins un volet d'obturation (17) est dans une position déployée de manière à dévier une partie dudit écoulement de fluide (10B) vers ladite ouverture radiale,
cet inverseur (12) comprennent un mécanisme d'actionnement configuré pour déplacer l'au moins un volet d'obturation (17) entre la position rétractée et une position partiellement déployée lorsque la structure externe mobile (16) est dans la position de fermeture, de manière à faire passer l'inverseur (12) respectivement entre ladite configuration de poussée pleine et une configuration de poussée réduite, le mécanisme d'actionnement comprenant au moins une biellette (18) et un organe d'entraînement (20) de l'au moins une biellette (18), l'organe d'entraînement (20) étant mobile entre une position de repos et une position active, l'au moins une biellette (18) étant reliée en une première extrémité à l'au moins un volet d'obturation (17) et en une deuxième extrémité à l'organe d'entraînement (20) de sorte que le déplacement de l'organe d'entraînement (20) entre la position de repos et la position active entraîne un déplacement de l'au moins un volet d'obturation (17) respectivement entre la position rétractée et la position partiellement déployée, **caractérise en ce que** le déplacement de l'organe d'entraînement (20) entre la position de repos et la position active comprend un mouvement de rotation de l'organe d'entraînement (20) autour d'un axe longitudinal (A1) de l'inverseur (12).

2. Inverseur (12) selon la revendication 1, dans lequel l'organe d'entraînement (20) est porté par la structure interne fixe (13).

3. Inverseur (12) selon la revendication 1 ou 2, dans lequel le déplacement de l'organe d'entraînement (20) entre la position de repos et la position active comprend un mouvement de translation de l'organe d'entraînement (20) selon un axe longitudinal (A1) de l'inverseur (12).

4. Inverseur (12) selon l'une quelconque des revendications 1 à 3, cet inverseur (12) comprenant une pluralité de volets d'obturation (17) et une pluralité de biellettes (18) correspondantes, l'organe d'entraînement (20) comprenant au moins un secteur d'anneau auquel sont reliées plusieurs desdites biellettes (18).

5. Inverseur (12) selon l'une quelconque des revendications 1 à 4, dans lequel l'au moins une biellette (18) est configurée pour entraîner l'au moins un volet d'obturation (17) entre la position rétractée et la position déployée lorsque la structure externe mobile (16) est déplacée entre la position de fermeture et la position d'ouverture.

6. Ensemble propulsif (1) pour aéronef, cet ensemble propulsif (1) comprenant un inverseur (12) selon l'une quelconque des revendications 1 à 5.

7. Aéronef comprenant un ensemble propulsif (1) selon la revendication 6.

8. Procédé de déploiement d'au moins un volet d'obturation (17) d'un inverseur (12) selon l'une quelconque des revendications 1 à 5, ce procédé comprenant simultanément une étape de maintien de ladite structure externe mobile (16) dans ladite position de fermeture et une étape de déplacement de l'au moins un volet d'obturation (17), à l'aide dudit mécanisme d'actionnement, entre ladite position rétractée et ladite position partiellement déployée.

## Patentansprüche

1. Schubumkehrvorrichtung (12) für eine Antriebseinheit (1) eines Flugzeugs, wobei die Umkehrvorrichtung (12) eine feststehende Innenstruktur (13), eine bewegliche Außenstruktur (16) und mindestens eine Verschlusskappe (17) umfasst, wobei die Umkehrvorrichtung (12) so konfiguriert, dass sie platziert werden kann in:
- einer Konfiguration mit voller Schubkraft, in der sich die bewegliche Außenstruktur (16) in einer geschlossenen Position befindet und sich die mindestens eine Verschlusskappe (17) in einer zurückgezogenen Position befindet, um einen Fluidstrom (10B) in einen Kanal (11B) zu leiten, der radial im Inneren durch die feststehende Innenstruktur (13) und radial außen durch die bewegliche Außenstruktur (16) begrenzt ist,
- einer Schubumkehrkonfiguration, in der sich die bewegliche Außenstruktur (16) in einer offenen Position befindet, die eine radiale Öffnung freigibt, und in der sich die mindestens eine Verschlusskappe (17) in einer ausgefahrenen Position befindet, um einen Teil des Fluidstroms (10B) in Richtung der radialen Öffnung umzuleiten,
wobei die Umkehrvorrichtung (12) einen Betätigungsmechanismus umfasst, der dazu konfiguriert ist, die mindestens eine Verschlussklappe (17) zwischen der zurückgezogenen Position und einer teilweise ausgefahrenen Position zu verschieben, wenn sich die bewegliche Außenstruktur (16) in der geschlossenen Position befindet, um zu bewirken, dass die Umkehrvorrichtung (12) jeweils zwischen der Konfiguration mit voller Schubkraft und eine Konfiguration mit reduzierter Schubkraft wechselt, wobei der Betätigungsmechanismus mindestens eine Schubstange (18) und ein Antriebselement (20) für die mindestens eine Schubstange (18) umfasst, wobei das Antriebselement (20) zwischen einer Ruheposition und einer aktiven Position bewegbarist, wobei die mindestens eine Schubstange (18) an einem ersten Ende mit der mindestens einen Verschlussklappe (17) und an einem zweiten Ende mit dem Antriebselement (20) verbunden ist, so dass die Verschiebung des Antriebselements (20) zwischen der Ruheposition und der aktiven Position eine Verschiebung der mindestens einen Verschlussklappe (17) jeweils zwischen der zurückgezogenen Position und der teilweise ausgefahrenen Position bewirkt,
**dadurch gekennzeichnet, dass** die Verschiebung des Antriebselements (20) zwischen der Ruheposition und der aktiven Position eine Drehbewegung des Antriebselements (20) um eine Längsachse (A1) der Umkehrvorrichtung (12) umfasst.

2. Umkehrvorrichtung (12) nach Anspruch 1, wobei das Antriebselement (20) von der feststehenden Innenstruktur (13) getragen wird.

3. Umkehrvorrichtung (12) nach Anspruch 1 oder 2, wobei die Verschiebung des Antriebselements (20) zwischen der Ruheposition und der aktiven Position eine translatorische Bewegung des Antriebselements (20) entlang einer Längsachse (A1) der Umkehrvorrichtung (12) umfasst.

4. Umkehrvorrichtung (12) nach einem der Ansprüche 1 bis 3, wobei die Umkehrvorrichtung (12) eine Vielzahl von Verschlussklappen (17) und eine Vielzahl von entsprechenden Schubstangen (18) umfasst, wobei das Antriebselement (20) mindestens einen ringförmigen Querschnitt aufweist, mit dem die Vielzahl von Schubstangen (18) verbunden ist.

5. Umkehrvorrichtung (12) nach einem der Ansprüche 1 bis 4, wobei die mindestens eine Schubstange (18) konfiguriert ist, um die mindestens eine Verschlussklappe (17) zwischen derzurückgezogenen Position und der ausgefahrenen Position anzutreiben, wenn die bewegliche Außenstruktur (16) zwischen der geschlossenen Position und der offenen Position verschoben wird.

6. Antriebseinheit (1) für ein Luftfahrzeug, wobei die Antriebseinheit (1) eine Umkehrvorrichtung (12) nach einem der Ansprüche 1 bis 5 umfasst.

7. Flugzeug, umfassend eine Antriebseinheit (1) nach Anspruch 6.

8. Verfahren zum Bereitstellen mindestens einer Verschlussklappe (17) einer Umkehrvorrichtung (12) nach einem der Ansprüche 1 bis 5, wobei das Verfahren gleichzeitig einen Schritt des Haltens der beweglichen Außerstruktur (16) in der geschlossenen Position und einen Schritt des Verschiebens der mindestens einen Verschlussklappe (17) unter Verwendung des Betätigungsmechanismus zwischen der zurückgezogenen Position und der teilweise ausgefahrenen Position umfasst.

## Claims

1. Thrust reverser (12) for an aircraft propulsion assembly (1), this reverser (12) comprising a fixed internal structure (13), a mobile external structure (16) and at least one blocking flap (17), this reverser (12) being configured to be placed in:
- a full thrust configuration wherein the mobile external structure (16) is in a closing position and the at least one blocking flap (17) is in a retracted position so as to channel a fluid flow (10B) in a conduit (11B) delimited radially inwards by the fixed internal structure (13) and radially outwards by the mobile external structure (16),
- a thrust reversal configuration wherein the mobile external structure (16) is in an opening position freeing a radial opening, and wherein the at least one blocking flap (17) is in a deployed position so as to deflect a portion of said fluid flow (10B) towards said radial opening,
this reverser (12) comprising an actuation mechanism configured to move the at least one blocking flap (17) between the retracted position and a partially deployed position when the mobile external structure (16) is in the closing position, so as to switch the reverser (12) respectively between said full thrust configuration and a reduced thrust configuration, the actuation mechanism comprising at least one tie rod (18) and a driving member (20) of the at least one tie rod (18), the driving member (20) being movable between an idle position and an active position, the at least one tie rod (18) being connected at a first end to the at least one blocking flap (17) and at a second end to the driving member (20) such that the movement of the driving member (20) between the idle position and the active position induces a movement of the at least one blocking flap (17) respectively between the retracted position and the partially deployed position,
**characterised in that** the movement of the driving member (20) between the idle position and the active position comprises a rotation movement of the driving member (20) about a longitudinal axis (A1) of the reverser (12).

2. Reverser (12) according to claim 1, wherein the driving member (20) is borne by the fixed internal structure (13).

3. Reverser (12) according to claim 1 or 2, wherein the movement of the driving member (20) between the idle position and the active position comprises a rotation movement of the driving member (20) along a longitudinal axis (A1) of the reverser (12).

4. Reverser (12) according to any one of claims 1 to 3, this reverser (12) comprising a plurality of blocking flaps (17) and a plurality of corresponding tie rods (18), the driving member (20) comprising at least one ring sector to which several of said tie rods (18) are connected.

5. Reverser (12) according to any one of claims 1 to 4, wherein the at least one tie rod (18) can be configured to drive the at least one blocking flap (17) between the retracted position and the deployed position when the mobile external structure (16) is moved between the closing position and the opening position.

6. Aircraft propulsion assembly (1), this propulsion assembly (1) comprising a reverser (12) according to any one of claims 1 to 5.

7. Aircraft comprising a propulsion assembly (1) according to claim 6.

8. Method for deploying at least one blocking flap (17) of a reverser (12) according to any one of claims 1 to 5, this method simultaneously comprising a step for holding said mobile external structure (16) in said closing position and a step for moving the at least one blocking flap (17), using said actuation mechanism, between said retracted position and said partially deployed position.
